# EUROPEAN PATENT SPECIFICATION

(11) **EP 4 506 525 B1**
(45) Date of publication and mention of the grant of the patent: **21.01.2026**
(21) Application number: 23190584.5
(22) Date of filing: 09.08.2023
(51) Int. Cl.: E05B 81/76, E05B 83/18, E05B 85/10, G05G 1/02, F16F 1/02, E05B 15/04

(54) **SENSOR ASSEMBLY HAVING A SPRING ELEMENT AND RATIO OF MOVEMENT**
SENSORANORDNUNG MIT FEDERELEMENT UND BEWEGUNGSVERHÄLTNIS
ENSEMBLE CAPTEUR COMPRENANT UN ÉLÉMENT RESSORT ET UN RAPPORT DE MOUVEMENT

(43) Date of publication of application: 12.02.2025
(73) Proprietor: Schaeffler Technologies AG & Co. KG, 91074 Herzogenaurach (DE)
(72) Inventor: Bajul, Xavier, 80687 München (DE); Vostarek, Petr, 80687 München (DE); Reitmeier, Willibald, 80687 München (DE); Braune, Reiner, 80687 München (DE)
(74) Representative: Schaeffler Technologies

(56) References cited:
- EP-A1- 1 162 332
- WO-A1-2014/131576
- WO-A1-2020/156812
- US-A- 4 793 601
- US-A1- 2011 013 408

## Description

The invention relates generally to a sensor assembly used for actuating a latch release mechanism of an access panel of a vehicle, where the access panel may be any type of door, liftgate, tailgate or the like.

Tailgates and liftgates, or any other type of access panel, for vehicles typically have a button or actuation device which opens the tailgate or liftgate. One type of commonly used button or actuation device is a "microbutton," or "microswitch," where the microbutton is integrated into the brand logo or badge on the vehicle.

Many current tailgate and liftgate designs incorporate the use of a microbutton or microswitch into the company logo on the vehicle, and the logo moves, or flexes, an undesirable amount. One proposed solution to this problem is to provide a flat button such that any part of the logo may be pressed to activate the mircobutton. However, the movement path on this type of sensor in insufficient for this solution to be effective.

Accordingly, there exists a need for a sensor assembly which may be integrated into the logo or badge of a vehicle, where the sensor assembly is used to actuate a latch release mechanism of an access panel of a vehicle, where minimal movement of the logo or badge is required to actuate the latch release mechanism.

An example of an actuation device configured to electrically open a tailgate of a vehicle is known in US 2022/0336162, titled "Actuation Device with Movable Switching Element, Vehicle and Method for Actuation."

Another example of an actuation device configured to electrically open a tailgate of a vehicle is DE 10 2021 004 934, titled "Vehicle Door Operator."

Another example of an actuation device configured to electrically open a tailgate of a vehicle is CN 106 097 485, titled "The User Can Actuate The Vehicle Opening And Closing Control Device."

Another example of an actuation device configured to electrically open a tailgate of a vehicle is KR 2014-029586, titled "Tailgate Switch Assembly Having Logo For Vehicle."

Another example of an actuation device configured to electrically open a tailgate of a vehicle is KR 2015-027317, titled "Vehicle Trunk Open Switch Device."

Another example of an actuation device configured to electrically open a tailgate of a vehicle is US 2022/0328261, titled "Actuation Device, Vehicle And A Method For Actuation."

US 2011013408 A1 discloses a combination light and switch assembly for a panel of a vehicle. The assembly includes a circuit board having an LED contact and a latch contact. The latch contact is configured to electrically couple to a latch of the panel. A LED is joined to the LED contact. The LED is configured to illuminate at least a portion of the panel. An actuator assembly is moveable toward the circuit board so that the actuator assembly engages the latch contact to operate the latch of the panel when the latch contact is engaged by the actuator assembly.

WO 2014131576 A1 relates to a pushbutton switch having a pushbutton switch cap which is mounted on a base plate and is composed of an integrally flexible material-The pushbutton switch cap is arranged over a switching region having at least two contact areas, and has a central pressure region, a deformation region which surrounds the central pressure region and is connected to said central pressure region, and a sealing region which is connected to the deformation region and is designed to seal off the space which is enclosed by the base plate and the pushbutton switch cap in a media-tight manner. By exerting a push-down force on the central pressure region, said central pressure region can be moved from an inoperative position to an end position in the direction of the base plate. Further, a switching bridge for establishing an electrical connection between the at least two contact areas is provided. The central pressure region is operatively connected to the switching bridge, and the switching bridge can be moved in the direction of a stop which is formed in the switching region.

Therefore, it is an object of the present invention to provide a sensor assembly which is used for actuating a latch release mechanism of an access panel of a vehicle. The access panel may be a door, a liftgate, a tailgate, or any other type of structure that may be opened and closed.

This object may be achieved by a sensor assembly according to independent claim 1, and the method according to independent claim 5.

Preferred embodiments are given in the dependent claims.

The present disclosure shows a sensor assembly which is used for actuating a latch release mechanism of an access panel of a vehicle. The sensor assembly includes a cover portion which is integrated into the logo or badge of the vehicle. A force is applied to the cover portion when the cover portion is pressed by a driver or passenger, which causes deflection of a spring element. The spring element is shaped such that movement of the spring element is a multiple or ratio of the movement of the cover portion. The movement of the spring element is detected by a sensing element, and when a required amount of movement of the spring element is detected, the sensor sends a signal to actuate a latch release mechanism. The spring element is a separate component from the cover portion and the sensing element.

According to a first aspect, the present invention is a trigger device for triggering an opening mechanism configured to open a flap of a vehicle, preferably a trunk of the vehicle, where the trigger device includes a housing assembly delimiting an inner space and including a first housing element movably mounted to a second housing element, the second housing element configured to be mounted to the flap of the vehicle, and the first housing element being relatively movable with respect to the second housing element between a non-triggering position and a triggering position along a trigger axis. A sensor device is arranged within the inner space and configured to detect a predetermined movement of the first housing element from the non-triggering position into the triggering position, the sensor device including a trigger element and a sensing element mounted to the second housing element, the sensing element being configured to detect movement of the trigger element. At least one deformation limiting element is connected to the trigger element and configured to limit the deformation of the trigger element in a direction substantially perpendicular to the trigger axis.

According to the present invention, the trigger element includes at least one deformation portion configured to be elastically deformed when the first housing element applies force to the trigger element, and at least one detection portion, where the movement of the detection portion is detected by the sensing element.

According to the invention, the deformation limiting element and the deformation portion are configured to increase the movement of the detection portion when force is applied to the first housing element to move the first housing element between the non-triggering position and the triggering position.

In an embodiment, the deformation portion includes at least one outer flange portion, the outer flange portion connected to the deformation limiting element, at least one outer leg portion integrally formed with the outer flange portion, at least one inner leg portion integrally formed with the outer leg portion. In an embodiment, the inner leg portion is integrally formed with the detection portion.

According to the present invention, the trigger element includes at least one support flange integrally formed with the detection portion, and the support flange secures the trigger element to the second housing element.

In an embodiment, the trigger element includes at least one contact area, and the first housing element is in contact with the contact area.

In an embodiment, the deformation limiting element is integrally formed with the second housing element.

According to a second aspect, the present invention is a method for using a trigger device for triggering an opening mechanism configured to open a flap of a vehicle, preferably a trunk of the vehicle, where the method includes the steps of providing a housing assembly delimiting an inner space and including a first housing element movably mounted to a second housing element, the second housing element configured to be mounted to the flap of the vehicle, and the first housing element being relatively movable with respect to the second housing element between a non-triggering position and a triggering position along a trigger axis. The method also includes providing a sensor device arranged within the inner space, the sensor device including a trigger element and a sensing element mounted to the second housing element, providing at least one deformation limiting element connected to the trigger element, providing at least one deformation portion being part of the trigger element, and providing at least one detection portion being part of the trigger element.

The trigger element includes at least one support flange integrally formed with the detection portion, and the support flange secures the trigger element to the second housing element.

According to the present invention, the method includes detecting a predetermined movement of the first housing element from the non-triggering position into the triggering position using the sensor device, detecting movement of the trigger element using the sensing element.

According to the invention, the method includes limiting the deformation of the trigger element in a direction substantially perpendicular to the trigger axis using the deformation limiting element.

According to the invention, the method includes elastically deforming the deformation portion when the first housing element applies force to the trigger element.

According to the invention, the method includes detecting the movement of the detection portion using the sensing element, and the deformation limiting element and the deformation portion are configured to increase the movement of the detection portion when force is applied to the first housing element to move the first housing element between the non-triggering position and the triggering position.

Further areas of applicability of the present invention will become apparent from the detailed description provided hereinafter. It should be understood that the detailed description and specific examples, while indicating the preferred embodiment of the invention, are intended for purposes of illustration only and are not intended to limit the scope of the invention.

The present invention will become more fully understood from the detailed description and the accompanying drawings, wherein:
- Fig. 1: is a diagram of a sensor assembly which is used for actuating a latch release mechanism, according to an example;
- Fig. 2: is a perspective view of a spring element which is part of a sensor assembly used for actuating a latch release mechanism, according to an example;
- Fig. 3: is an enlarged view of the area surrounded by the dashed line in Fig. 1;
- Fig. 4: is an enlarged view of the area surrounded by the dashed line in Fig. 1, with the cover portion removed;
- Fig. 5: is a graph representing the movement of a cover portion relative to the movement of a central flange, the central flange being part of a spring element, and the cover portion and central flange are part of a sensor assembly used for actuating a latch release mechanism;
- Fig. 6: is graph representing the correlation between the movement of a cover portion and the ratio of the angles of two parts of a leg portion, where the leg portion is part of a spring element, and the cover portion and spring element are part of a sensor assembly used for actuating a latch release mechanism;
- Fig. 7: is a graph representing the change in the overall height of a spring element and the change in the ratio of the angles of two parts of a leg portion, where the leg portion is part of a spring element, and the spring element is part of a sensor assembly used for actuating a latch release mechanism;
- Fig. 8: is a perspective view of an alternate embodiment of a spring element which is part of a sensor assembly used for actuating a latch release mechanism, according to embodiments of the present invention; and
- Fig. 9: is a perspective view of an alternate embodiment of a spring element connected to a second housing element, where the spring element is part of a sensor assembly used for actuating a latch release mechanism, according to embodiments of the present invention.

The following description of the preferred embodiment(s) is merely exemplary in nature and is in no way intended to limit the invention, its application, or uses.

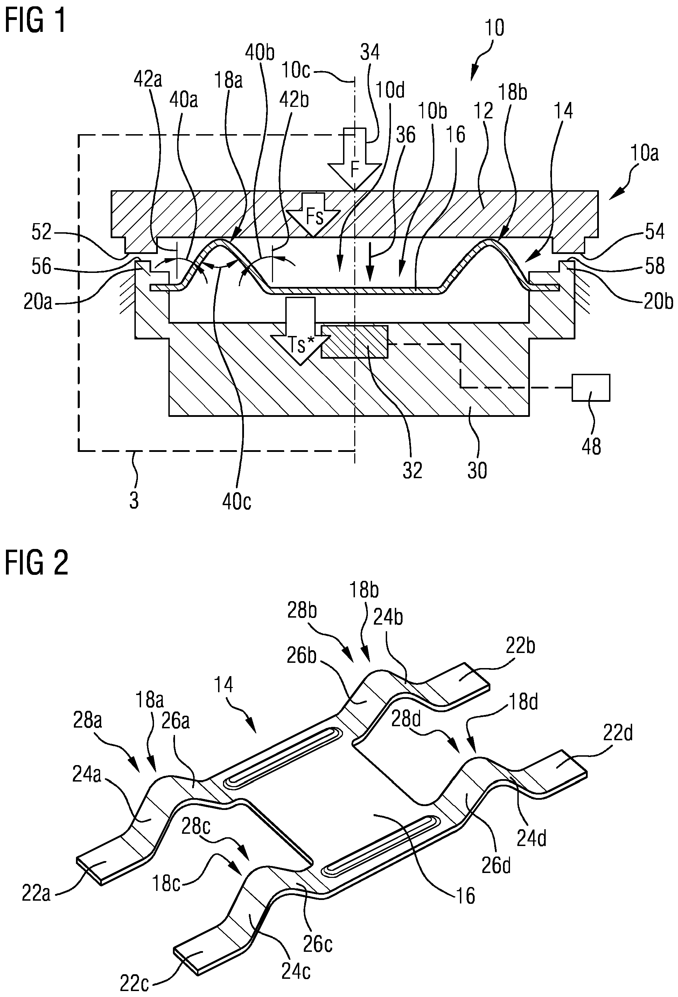

Referring to Fig. 1, an example of a trigger device used for actuating a latch release mechanism for a vehicle is shown generally at 10. This example does not represent an embodiment of the present invention. The trigger device 10 and latch release mechanism may be used to open any type of access panel, such as a door, liftgate, or tailgate. The trigger device 10 includes a housing assembly 10a delimiting an inner space, shown generally at 10b, where the housing assembly 10a includes a first housing element 12, and the first housing element 12 may be integrated as part of the logo or badge of a vehicle. A sensor device, shown generally at 10d, is arranged within the inner space 10b. The sensor device 10d includes a trigger element, or spring element, shown generally at 14, and the first housing element 12 is in contact with the trigger element 14. The trigger element 14 includes a detection portion, or central flange 16, and integrally formed with the detection portion 16 is a plurality of deformation portions, or leg portions 18a,18b,18c,18d. The first deformation portion 18a and third deformation portion 18c are connected to a deformation limiting element, or first wall 20a, and the second deformation portion 18b and fourth deformation portion 18d are connected to a second deformation limiting element 20b.

More specifically, each deformation portion 18a,18b,18c,18d includes a corresponding outer flange portion 22a,22b,22c,22d, an outer leg portion 24a,24b,24c,24d, and an inner leg portion 26a,26b,26c,26d. Each outer flange portion 22a,22b,22c,22d is integrally formed with a corresponding outer leg portion 24a,24b,24c,24d, and each outer leg portion 24a,24b,24c,24d is integrally formed with a corresponding inner leg portion 26a,26b,26c,26d. Each inner leg portion 26a,26b,26c,26d is integrally formed with the detection portion 16. Each deformation portion 18a,18b,18c,18d has a contact area, each of which is shown generally at 28a,28b,28c,28d, which is in contact with the bottom surface of the first housing element 12.

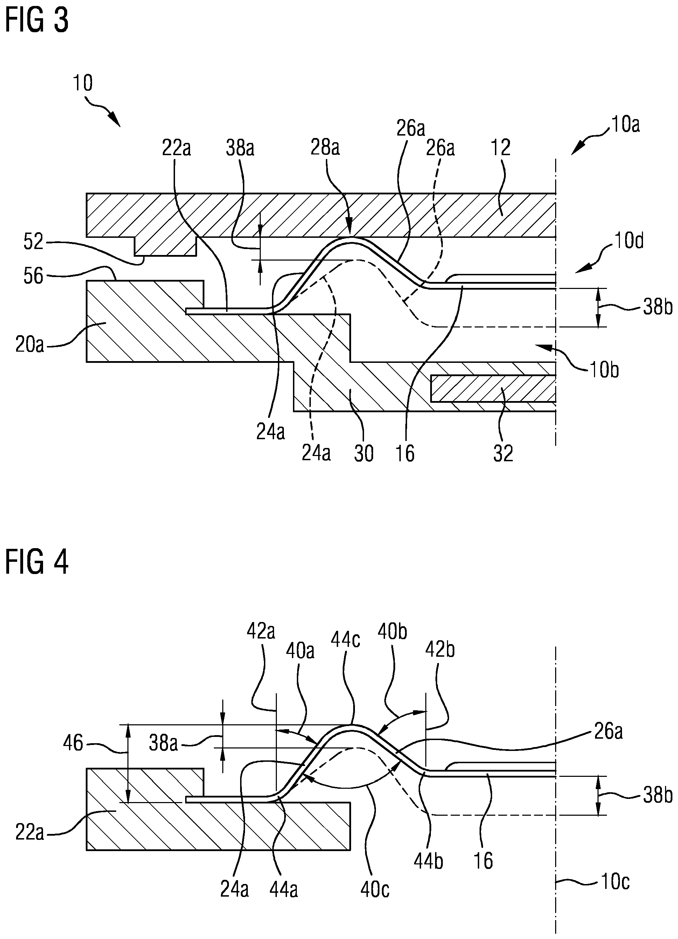

The housing assembly 10a of the trigger device 10 also includes a second housing element 30, which also delimits the inner space 10b, and the sensor device 10d also includes a sensing element 32. Mounted in the second housing element 30 is the sensing element 32. The deformation limiting elements 20a,20b may be part of the second housing element 30, as shown in Figs. 1 and 3, or the deformation limiting elements 20a,20b may be part of a separate housing. The sensing element 32 is able to detect movement of the detection portion 16 of the trigger element 14. Referring to Figs. 1 and 3, the first housing element 12 and the trigger element 14 are in a first position or non-triggering position. When a force, indicated by the arrow 34, is applied to the first housing element 12, the same force is also applied to the trigger element 14, causing the trigger element 14 to deflect. The force from the first housing element 12 is applied to the contact areas 28a,28b,28c,28d of the deformation portions 18a,18b,18c,18d. The first housing element 12 moves in the direction of the arrow 36 along a trigger axis 10c, and the detection portion 16 also moves in the direction of the arrow 36 along the trigger axis 10c. The movement of the trigger element 14, or more specifically the deformation portions 18a,18b,18c,18d, is limited in a direction substantially perpendicular to the trigger axis 10c by the deformation limiting elements 20a,20b. The limitation of the movement of the deformation portions 18a,18b,18c,18d in the direction substantially perpendicular to the trigger axis 10c and the shape of the deformation portions 18a,18b,18c,18d is such that when the first housing element 12 moves a first distance 38a, the detection portion 16 moves a second distance 38b from the non-triggering position to a second position or triggering position, where the second distance 38b is greater than the first distance 38a. Additionally, the movement of the first housing element 12 in the direction of the arrow 36 along the trigger axis 10c is limited to the length of the first distance 38a. Integrally formed with the first housing element 12 is a first stopper 52 and a second stopper 54. Integrally formed with the deformation limiting element 20a is a first deformation limiting surface 56, and integrally formed with the second deformation limiting element 20b is a second deformation limiting surface 58. When the first housing element 12 is moved to the triggering position, the first stopper 52 is in contact with the first deformation limiting surface 56, and the second stopper 54 is in contact with the second deformation limiting surface 58. The limitation of movement of the first housing element 12 and the trigger element 14 prevents damage to the first housing element 12 and the trigger element 14 as a result of excessive force applied to the first housing element 12 during operation.

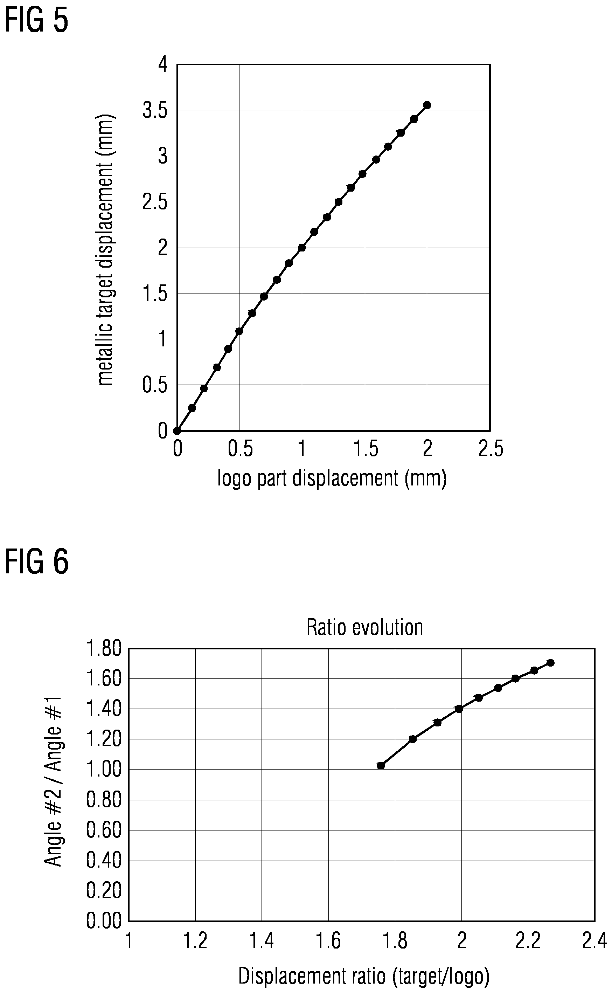

The triggering position of the trigger element 14 is shown in Fig. 3. An example of the movement of the first housing element 12 relative to the movement of the detection portion 16 is shown in Fig. 5. For example, it is seen in Fig. 5 when the first distance 38a the first housing element 12 is moved (in the direction of the arrow 36) is 1 mm, the second distance 38b the detection portion 16 is moved is 2 mm. However, it is within the scope of the invention that the shape of the deformation portions 18a,18b,18c,18d may be changed such that the detection portion 16 may move a greater or lesser distance 38b when the first distance 38a the first housing element 12 is moved is 1 mm. It is also within the scope of the invention that the relationship between the movement of the first housing element 12 relative to the movement of the detection portion 16 may be linear or non-linear. An example of the movement of the first housing element 12 and the relative movement of the detection portion 16 having a non-liner relationship is shown in the graph in Fig. 5.

It is also shown in Figs. 1-3 that the outer flange portions 22a,22b,22c,22d, the outer leg portions 24a,24b,24c,24d, and the inner leg portion 26a,26b,26c,26d are positioned at various angles relative to one another, and to the detection portion 16.

For example, with regard to the first deformation portion 18a, the first outer leg potion 24a is located at a first angle 40a relative to a vertical reference line 42a, where the vertical reference line 42a intersects an inflection point 44a between the outer flange portion 22a and the first outer leg potion 24a. The first inner leg portion 26a is located at a second angle 40b relative to another vertical reference line 42b, where the vertical reference line 42b intersects an inflection point 44b between the first inner leg portion 26a and the detection portion 16. The first outer leg portion 24a and the first inner leg portion 26a are positioned at a third angle 40c relative to one another, and the vertex 44c between the first outer leg portion 24a and the first inner leg portion 26a also corresponds to the contact area 28a of the first deformation portion 18a.

Because the outer flange portion 22a, the outer leg portion 24a, and the inner leg portion 26a all move as a result of the force 34 being applied to the first housing element 12, the angles 40a,40b,40c also change as well when the position of the first housing element 12 and trigger element 14 change. When the detection portion 16 has moved the second distance 38b, the first angle 40a and the third angle 40c have increased, and the second angle 40b has decreased. For example, referring to the graph shown in Fig. 6, the correlation between the movement of the first housing element 12 to the ratio of the first angle 40a to the second angle 40b is shown. The graph in Fig. 6 shows the ratio of the second angle 40b divided by the first angle 40a, and this ratio increases as the first housing element 12 is moved the after the application of the force 34. Because of the shape of the trigger element 14, the correlation between the ratio of the second angle 40b divided by the first angle 40a and the movement of the first housing element 12 is non-linear, as shown in Fig. 6.

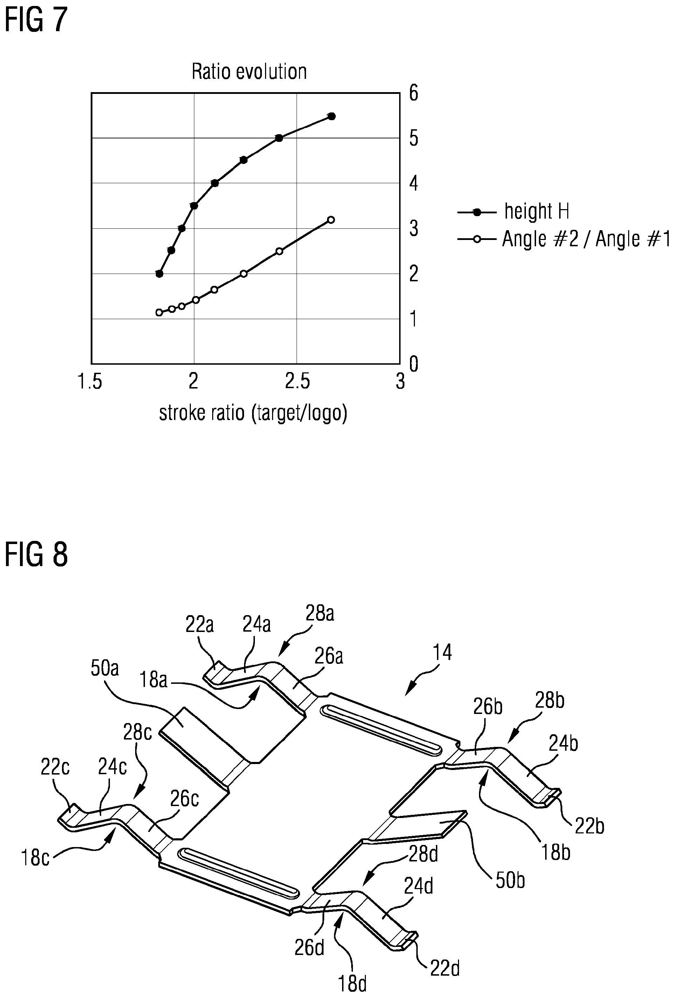

Referring now to Fig. 7, another graph is shown which includes the change in the overall height 46 of the trigger element 14 and the change in the ratio of the second angle 40b divided by the first angle 40a. Fig. 7 also shows the combination of the non-linear relationship between the displacements of the first housing element 12 and the detection portion 16.

The other deformation portions 18b,18c,18d are similarly shaped, and therefore the outer flange portions 22b,22c,22d, the outer leg portions 24b,24c,24d, and the inner leg portion 26b,26c,26d are positioned similarly relative to one another, and the movement of the other deformation portions 18b,18c,18d is similar to that of the first deformation portion 18a as described above.

The sensing element 32 is able to detect the distance 38b the detection portion 16 has been moved. Once the sensor 32 has detected that the detection portion 16 has been moved the distance 38b, the sensing element 32 sends a signal to actuate a latch release mechanism 48 to open the tailgate or liftgate of the vehicle.

The ratio by which the detection portion 16 moves relative to the first housing element 12 is determined by the shape of the deformation portions 18a,18b,18c,18d. The ratio may be changed by changing the shape of one or more of the outer flange portion 22a,22b,22c,22d, the outer leg portion 24a,24b,24c,24d, and/or the inner leg portion 26a,26b,26c,26d. The ratio also may be changed by changing one or more of the angles 40a,40b,40c. The outer flange portions 22a,22b,22c,22d, the outer leg portions 24a,24b,24c,24d, the inner leg portions 26a,26b,26c,26d, and/or the deformation limiting elements 20a,20b may be variable in dimension, position, or thickness. The spring or material properties for each of these components may also be changed or varied to achieve desired ratios of movement of the deflection portion 16.

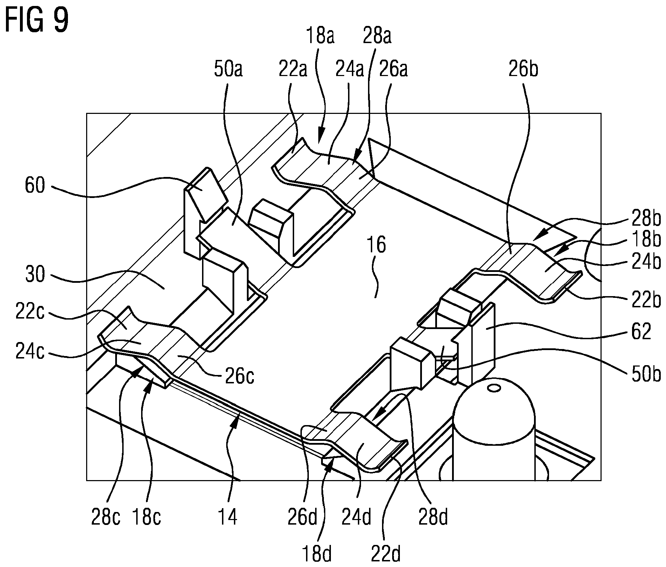

An embodiment of the trigger element 14 according to the present invention is shown in Figs. 8 and 9, with like numbers referring to like elements. In the embodiment shown, there is a first support flange 50a, and a second support flange 50b. Both support flanges 50a,50b are integrally formed with the detection portion 16, and are engaged with mounting brackets 60,62 formed as part of the second housing element 30. The support flanges 50a,50b ensure the radial position of the detection portion 16 in relation to the sensing element 32 after assembly. The support flanges 50a,50b also maintain the position of the trigger element 14 in place relative to the second housing element 30 during shipping.

In an embodiment, the first housing element 12 is part of a logo or badge of a vehicle, where the force 34 may be applied to any part of the first housing element 12 to result in the detection portion 16 moving the second distance 38b. Because the first distance 38a is less than the second distance 38b, the movement of the first housing element 12 may be minimized.

The present invention is not limited to the embodiments described above. In alternate embodiments, the shape and length of one or more of the outer flange portion 22a,22b,22c,22d, the outer leg portion 24a,24b,24c,24d, and/or the inner leg portion 26a,26b,26c,26d may be changed to effect the second distance 38b the detection portion 16 is moved as a result of the first housing element 12 being moved the first distance 38a. In an embodiment, the present invention is a trigger device 10 for a latch release mechanism for a vehicle. The trigger device 10 includes a first housing element 12 in contact with a trigger element 14. The trigger element 14 is connected to a second housing element 30, and a sensing element 32 is mounted in the second housing element 30. A force 34 may be applied to the first housing element 12 to move the first housing element 12 a first distance 38a, which results in a detection portion 16 moving a second distance 38b. The sensing element 32 detects the movement of the detection portion 16. Once the detection portion 16 has moved the second distance 38b, the sensing element 32 sends a signal to actuate a latch release mechanism to open an access panel of a vehicle. The access panel may by any type of panel, such as, but not limited to, a door, tailgate, or liftgate. The trigger element 14 includes several deformation portions 18a,18b,18c,18d, where the shape of the deformation portions 18a,18b,18c,18d may be changed, such that the distance 38b the detection portion 16 moves as a result of movement of the first housing element 12 may be increased or decreased.

The description of the invention is merely exemplary in nature and, thus, variations that do not depart from the definition of the claims are intended to be within the scope of the invention. Such variations are not to be regarded as a departure from the scope of the invention.

## Claims

1. A trigger device (10) for triggering an opening mechanism configured to open a flap of a vehicle, preferably a trunk of the vehicle, the trigger device (10) comprising:
- a housing assembly (10a) delimiting an inner space (10b) and including a first housing element (12) movably mounted to a second housing element (30), the second housing element (30) configured to be mounted to the flap of the vehicle, and the first housing element (12) being relatively movable with respect to the second housing element (30) between a non-triggering position and a triggering position along a trigger axis (10c);
- a sensor device (10d) arranged within the inner space (10b) and configured to detect a predetermined movement of the first housing element (12) from the non-triggering position into the triggering position, the sensor device (10d) including a trigger element (14) and a sensing element (32) mounted to the second housing element (30), the sensing element (32) being configured to detect movement of the trigger element (14); and
- at least one deformation limiting element (20a,20b) connected to the trigger element (14) and configured to limit the deformation of the trigger element (14) in a direction substantially perpendicular to the trigger axis (10c);
- wherein the trigger element (14) includes at least one deformation portion (18a,18b,18c,18d) configured to be elastically deformed when the first housing element (12) applies force to the trigger element (14), and at least one detection portion (16), where the movement of the at least one detection portion (16) is detected by the sensing element (32); wherein the trigger element (14) further includes at least one support flange (50a) integrally formed with the detection portion (16), wherein the at least one support flange (50a) secures the trigger element (14) to the second housing element (30); and
wherein the deformation limiting element (20a,20b) and the deformation portion (18a,18b) are configured to increase the movement of the detection portion (16) when force is applied to the first housing element (12) to move the first housing element (12) between the non-triggering position and the triggering position.

2. The trigger device (10) of one of the preceding claims, the at least one deformation portion (18a,18b,18c,18d) further comprising:
- at least one outer flange portion (22a,22b,22c,22d), the at least one outer flange portion (22a,22b,22c,22d) connected to the at least one deformation limiting element (20a,20b);
- at least one outer leg portion (24a,24b,24c,24d) integrally formed with the at least one outer flange portion (22a,22b,22c,22d); and
- at least one inner leg portion (26a,26b,26c,26d) integrally formed with the at least one outer leg portion (24a,24b,24c,24d);
- wherein the at least one inner leg portion (26a,26b,26c,26d) is integrally formed with the at least one detection portion (16).

3. The trigger device (10) of one of the preceding claims, the trigger element (14) further comprising:
- at least one contact area (28a,28b,28c,28d);
- wherein the first housing element (12) is in contact with the at least one contact area (28a,28b,28c,28d).

4. The trigger device (10) of one of the preceding claims, wherein the at least one deformation limiting element (20a,20b) is integrally formed with the second housing element (30).

5. A method for using a trigger device (10) for triggering an opening mechanism configured to open a flap of a vehicle, preferably a trunk of the vehicle, comprising the steps of:
- providing a housing assembly (10a) delimiting an inner space (10b) and including a first housing element (12) movably mounted to a second housing element (30), the second housing element (30) configured to be mounted to the flap of the vehicle, and the first housing element (12) being relatively movable with respect to the second housing element (30) between a non-triggering position and a triggering position along a trigger axis (10c);
- providing a sensor device (10d) arranged within the inner space (10b), the sensor device (10d) including a trigger element (14) and a sensing element (32) mounted to the second housing element (30); wherein the trigger element (14) includes at least one support flange (50a) integrally formed with the detection portion (16), wherein the at least one support flange (50a) secures the trigger element (14) to the second housing element (30);
- providing at least one deformation limiting element (20a,20b) connected to the trigger element (14);
- providing at least one deformation portion (18a,18b,18c,18d) being part of the trigger element (14); and
- providing at least one detection portion (16) being part of the trigger element (14);
- detecting a predetermined movement of the first housing element (12) from the non-triggering position into the triggering position using the sensor device (10d);
- detecting movement of the trigger element (14) using the sensing element (32);
- limiting the deformation of the trigger element (14) in a direction substantially perpendicular to the trigger axis (10c) using the at least one deformation limiting element (20a,20b);
- elastically deforming the at least one deformation portion (18a,18b,18c,18d) when the first housing element (12) applies force to the trigger element (14);
- detecting the movement of the at least one detection portion (16) using the sensing element (32), and the deformation limiting element (20a,20b) and the deformation portion (18a,18b) are configured to increase the movement of the at least one detection portion (16) when force is applied to the first housing element (12) to move the first housing element (12) between the non-triggering position and the triggering position.

## Patentansprüche

1. Auslöservorrichtung (10) zum Auslösen eines Öffnungsmechanismus, der dazu ausgebildet ist, eine Klappe eines Fahrzeugs, vorzugsweise einen Kofferraum des Fahrzeugs, zu öffnen, wobei die Auslöservorrichtung (10) Folgendes aufweist:
- eine Gehäusebaugruppe (10a), die einen Innenraum (10b) begrenzt und ein erstes Gehäuseelement (12) umfasst, das beweglich an einem zweiten Gehäuseelement (30) montiert ist, wobei das zweite Gehäuseelement (30) dazu ausgebildet ist, an der Klappe des Fahrzeugs montiert zu werden, und wobei das erste Gehäuseelement (12) bezüglich des zweiten Gehäuseelements (30) zwischen einer nicht auslösenden Position und einer auslösenden Position entlang einer Auslöserachse (10c) relativ beweglich ist,
- eine Sensorvorrichtung (10d), die in dem Innenraum (10b) angeordnet und dazu ausgebildet ist, eine vorbestimmte Bewegung des ersten Gehäuseelements (12) aus der nicht auslösenden Position in die auslösende Position zu detektieren, wobei die Sensorvorrichtung (10d) ein Auslöserelement (14) und ein Sensorelement (32) umfasst, das an dem zweiten Gehäuseelement (30) montiert ist, wobei das Sensorelement (32) zum Detektieren einer Bewegung des Auslöserelements (14) ausgebildet ist, und
- mindestens ein Deformationsbegrenzungselement (20a, 20b), das mit dem Auslöserelement (14) verbunden und dazu ausgebildet ist, die Deformation des Auslöserelements (14) in einer im Wesentlichen senkrecht zu der Auslöserachse (10c) verlaufenden Richtung zu begrenzen,
- wobei das Auslöserelement (14) mindestens einen Deformationsabschnitt (18a, 18b, 18c, 18d), der dazu ausgebildet ist, elastisch deformiert zu werden, wenn das erste Gehäuseelement (12) Kraft auf das Auslöserelement (14) ausübt, und mindestens einen Detektionsabschnitt (16) umfasst, wobei die Bewegung des mindestens einen Detektionsabschnitts (16) durch das Sensorelement (32) detektiert wird, wobei das Auslöserelement (14) ferner mindestens einen Stützflansch (50a) umfasst, der integral mit dem Detektionsabschnitt (16) ausgebildet ist, wobei der mindestens eine Stützflansch (50a) das Auslöserelement (14) an dem zweiten Gehäuseelement (30) befestigt, und
wobei das Deformationsbegrenzungselement (20a, 20b) und der Deformationsabschnitt (18a, 18b) dazu ausgebildet sind, die Bewegung des Detektionsabschnitts (16) zu erhöhen, wenn Kraft auf das erste Gehäuseelement (12) ausgeübt wird, um das erste Gehäuseelement (12) zwischen der nicht-auslösenden Position und der auslösenden Position zu bewegen.

2. Auslöservorrichtung (10) nach einem der vorhergehenden Ansprüche, wobei der mindestens eine Deformationsabschnitt (18a, 18b, 18c, 18d) ferner Folgendes aufweist:
- mindestens einen äußeren Flanschabschnitt (22a, 22b, 22c, 22d), wobei der mindestens eine äußere Flanschabschnitt (22a, 22b, 22c, 22d) mit dem mindestens einen Deformationsbegrenzungselement (20a, 20b) verbunden ist,
- mindestens einen äußeren Schenkelabschnitt (24a, 24b, 24c, 24d), der integral mit dem mindestens einen äußeren Flanschabschnitt (22a, 22b, 22c, 22d) ausgebildet ist, und
- mindestens einen inneren Schenkelabschnitt (26a, 26b, 26c, 26d), der integral mit dem mindestens einen äußeren Schenkelabschnitt (24a, 24b, 24c, 24d) ausgebildet ist,
- wobei der mindestens eine innere Schenkelabschnitt (26a, 26b, 26c, 26d) integral mit dem mindestens einen Detektionsabschnitt (16) ausgebildet ist.

3. Auslöservorrichtung (10) nach einem der vorhergehenden Ansprüche, wobei das Auslöserelement (14) ferner Folgendes aufweist:
- mindestens einen Kontaktbereich (28a, 28b, 28c, 28d),
- wobei das erste Gehäuseelement (12) mit der mindestens einen Kontaktfläche (28a, 28b, 28c, 28d) in Kontakt ist.

4. Auslöservorrichtung (10) nach einem der vorhergehenden Ansprüche, wobei das mindestens eine Deformationsbegrenzungselement (20a, 20b) integral mit dem zweiten Gehäuseelement (30) ausgebildet ist.

5. Verfahren zum Verwenden einer Auslöservorrichtung (10) zum Auslösen eines Öffnungsmechanismus, der dazu ausgebildet ist, eine Klappe eines Fahrzeugs, vorzugsweise einen Kofferraum des Fahrzeugs, zu öffnen, aufweisend die Schritte:
- Bereitstellen einer Gehäusebaugruppe (10a), die einen Innenraum (10b) begrenzt und ein erstes Gehäuseelement (12) umfasst, das beweglich an einem zweiten Gehäuseelement (30) montiert ist, wobei das zweite Gehäuseelement (30) dazu ausgebildet ist, an der Klappe des Fahrzeugs montiert zu werden, und wobei das erste Gehäuseelement (12) bezüglich des zweiten Gehäuseelements (30) zwischen einer nicht auslösenden Position und einer auslösenden Position entlang einer Auslöserachse (10c) relativ beweglich ist,
- Bereitstellen einer Sensorvorrichtung (10d), die in dem Innenraum (10b) angeordnet ist, wobei die Sensorvorrichtung (10d) ein Auslöserelement (14) und ein Sensorelement (32) umfasst, das an dem zweiten Gehäuseelement (30) montiert ist, wobei das Auslöserelement (14) mindestens einen Stützflansch (50a) umfasst, der integral mit dem Detektionsabschnitt (16) ausgebildet ist, wobei der mindestens eine Stützflansch (50a) das Auslöserelement (14) an dem zweiten Gehäuseelement (30) befestigt,
- Bereitstellen mindestens eines Deformationsbegrenzungselements (20a, 20b), das mit dem Auslöserelement (14) verbunden ist,
- Bereitstellen mindestens eines Deformationsabschnitts (18a, 18b, 18c, 18d), der Teil des Auslöserelements (14) ist, und
- Bereitstellen mindestens eines Detektionsabschnitts (16), der Teil des Auslöserelements (14) ist,
- Detektieren einer vorbestimmten Bewegung des ersten Gehäuseelements (12) aus der nicht auslösenden Position in die auslösende Position unter Verwendung der Sensorvorrichtung (10d),
- Erfassen einer Bewegung des Auslöserelements (14) unter Verwendung des Sensorelements (32),
- Begrenzen der Deformation des Auslöserelements (14) in einer im Wesentlichen senkrecht zu der Auslöserachse (10c) verlaufenden Richtung unter Verwendung des mindestens einen Deformationsbegrenzungselements (20a, 20b),
- elastisches Deformieren des mindestens einen Deformationsabschnitts (18a, 18b, 18c, 18d), wenn das erste Gehäuseelement (12) Kraft auf das Auslöserelement (14) ausübt,
- Detektieren der Bewegung des mindestens einen Detektionsabschnitts (16) unter Verwendung des Sensorelements (32), wobei das Deformationsbegrenzungselement (20a, 20b) und der Deformationsabschnitt (18a, 18b) dazu ausgelegt sind, die Bewegung des mindestens einen Detektionsabschnitts (16) zu erhöhen, wenn Kraft auf das erste Gehäuseelement (12) ausgeübt wird, um das erste Gehäuseelement (12) zwischen der nicht auslösenden Position und der auslösenden Position zu bewegen.

## Revendications

1. Dispositif déclencheur (10) pour déclencher un mécanisme d'ouverture configuré pour ouvrir un volet d'un véhicule, de préférence un coffre du véhicule, le dispositif déclencheur (10) comprenant :
- un ensemble boîtier (10a) délimitant un espace intérieur (10b) et comportant un premier élément de boîtier (12) monté mobile sur un second élément de boîtier (30), le second élément de boîtier (30) étant conçu pour être monté sur le volet du véhicule, et le premier élément de boîtier (12) étant relativement mobile par rapport au second élément de boîtier (30) entre une position de non déclenchement et une position de déclenchement le long d'un axe de déclenchement (10c) ;
- un dispositif capteur (10d) disposé au sein de l'espace intérieur (10b) et configuré pour détecter un déplacement prédéterminé du premier élément de boîtier (12) de la position de non déclenchement à la position de déclenchement, le dispositif capteur (10d) comprenant un élément déclencheur (14) et un élément de détection (32) monté sur le second élément de boîtier (30), l'élément de détection (32) étant configuré pour détecter un déplacement de l'élément déclencheur (14) ; et
- au moins un élément de limitation de déformation (20a,20b) relié à l'élément déclencheur (14) et conçu pour limiter la déformation de l'élément déclencheur (14) dans une direction sensiblement perpendiculaire à l'axe de déclenchement (10c) ;
- dans lequel l'élément déclencheur (14) comporte au moins une partie de déformation (18a, 18b, 18c, 18d) conçue pour être déformée élastiquement lorsque le premier élément de boîtier (12) applique une force sur l'élément déclencheur (14) et au moins une partie de détection (16), où le déplacement de l'au moins une partie de détection (16) est détecté par l'élément de détection (32) ; dans lequel l'élément déclencheur (14) comprend en outre au moins une bride de support (50a) formée d'un seul tenant avec la partie de détection (16), ladite bride de support (50a) fixant l'élément déclencheur (14) au second élément de boîtier (30) ; et dans lequel l'élément de limitation de déformation (20a,20b) et la partie de déformation (18a,18b) sont conçus pour augmenter le déplacement de la partie de détection (16) lorsqu'une force est appliquée sur le premier élément de boîtier (12) pour déplacer le premier élément de boîtier (12) entre la position de non déclenchement et la position de déclenchement.

2. Dispositif déclencheur (10) selon l'une des revendications précédentes, l'au moins une partie de déformation (18a,18b,18c,18d) comprenant en outre :
- au moins une partie de bride externe (22a, 22b, 22c, 22d), l'au moins une partie de bride externe (22a, 22b, 22c, 22d) étant reliée à l'au moins un élément de limitation de déformation (20a, 20b) ;
- au moins une partie de pied externe (24a, 24b, 24c, 24d) formée d'un seul tenant avec l'au moins une partie de bride externe (22a, 22b, 22c, 22d) ; et
- au moins une partie de pied interne (26a, 26b, 26c, 26d) formée d'un seul tenant avec l'au moins une partie de pied externe (24a, 24b, 24c, 24d) ;
- dans lequel l'au moins une partie de pied interne (26a, 26b, 26c, 26d) est formée d'un seul tenant avec l'au moins une partie de détection (16).

3. Dispositif déclencheur (10) selon l'une des revendications précédentes, l'élément déclencheur (14) comprenant en outre :
- au moins une surface de contact (28a, 28b, 28c, 28d) ;
- dans lequel le premier élément de boitier (12) est en contact avec l'au moins une surface de contact (28a, 28b, 28c, 28d).

4. Dispositif déclencheur (10) selon l'une quelconque des revendications précédentes, dans lequel l'au moins un élément de limitation de déformation (20a, 20b) est formé d'un seul tenant avec le second élément de boîtier (30).

5. Procédé d'utilisation d'un dispositif déclencheur (10) pour déclencher un mécanisme d'ouverture configuré pour ouvrir un volet d'un véhicule, de préférence un coffre du véhicule, comprenant les étapes consistant à :
- fournir un ensemble boîtier (10a) délimitant un espace intérieur (10b) et comportant un premier élément de boîtier (12) monté mobile sur un second élément de boîtier (30), le second élément de boîtier (30) étant conçu pour être monté sur le volet du véhicule, et le premier élément de boîtier (12) étant relativement mobile par rapport au second élément de boîtier (30) entre une position de non déclenchement et une position de déclenchement le long d'un axe de déclenchement (10c) ;
- fournir un dispositif capteur (10d) disposé dans l'espace intérieur (10b), le dispositif capteur (10d) comprenant un élément déclencheur (14) et un élément de détection (32) monté sur le second élément de boîtier (30) ; dans lequel l'élément déclencheur (14) comporte au moins une bride de support (50a) formée d'un seul tenant avec la partie de détection (16), où l'au moins une bride de support (50a) fixe l'élément déclencheur (14) au second élément de boîtier (30) ;
- fournir au moins un élément de limitation de déformation (20a, 20b) relié à l'élément déclencheur (14) ;
- fournir au moins une partie de déformation (18a, 18b, 18c, 18d) faisant partie de l'élément déclencheur (14) ; et
- fournir au moins une partie de détection (16) faisant partie de l'élément déclencheur (14) ;
- détecter un déplacement prédéterminé du premier élément de boîtier (12) de la position de non déclenchement à la position de déclenchement à l'aide du dispositif capteur (10d) ;
- détecter un déplacement de l'élément déclencheur (14) à l'aide de l'élément de détection (32) ;
- limiter la déformation de l'élément déclencheur (14) selon une direction sensiblement perpendiculaire à l'axe de déclenchement (10c) à l'aide de l'au moins un élément de limitation de déformation (20a, 20b) ;
- déformer élastiquement l'au moins une partie de déformation (18a, 18b, 18c, 18d) lorsque le premier élément de boîtier (12) exerce une force sur l'élément déclencheur (14) ;
- détecter le déplacement de l'au moins une partie de détection (16) à l'aide de l'élément de détection (32), et l'élément de limitation de déformation (20a,20b) et la partie de déformation (18a,18b) sont conçus pour augmenter le déplacement de la partie de détection (16) lorsqu'une force est appliquée sur le premier élément de boîtier (12) pour déplacer le premier élément de boîtier (12) entre la position de non déclenchement et la position de déclenchement.
